# EUROPEAN PATENT SPECIFICATION

(11) **EP 3 412 544 B1**
(45) Date of publication and mention of the grant of the patent: **11.11.2026**
(21) Application number: 18382386.3
(22) Date of filing: 04.06.2018
(51) Int. Cl.: B62J 1/08, F16B 7/14

(54) **TELESCOPIC SEAT POST FOR BICYCLES**
TELESKOPISCHE SATTELSTÜTZE FÜR FAHRRÄDER
MONTANT DE SIÈGE TÉLESCOPIQUE POUR BICYCLETTES

(30) Priority: 06.06.2017 ES 201730673 U
(43) Date of publication of application: 12.12.2018
(73) Proprietor: Bagés Estopà, Ricard, 08173 Sant Cugat del Vallés (ES)
(72) Inventor: Bagés Estopà, Ricard, 08173 Sant Cugat del Vallés (ES)
(74) Representative: Espiell Volart, Eduardo Maria

(56) References cited:
- EP-A2- 3 042 833
- CN-U- 204 688 263
- US-A1- 2015 232 142
- US-A1- 2016 304 146

## Description

### OBJECT OF THE INVENTION

The invention, as stated in the title of this specification, refers to a telescopic seat post for bicycles that provides, to the function to which it is designed, advantages and characteristics of novelty, that are disclosed in details thereafter, that mean an improvement of the current state of the art.

The object of this invention refers to a telescopic seat post that allows to quickly and comfortably regulate the height of the saddle in the bicycle to which it is incorporated without it is required to get off it for that purpose, which shows an improved structural configuration with double inner tube that, among other advantages, provides the assembly forming the said seat post with more lightness and resistance.

### FIELD OF APPLICATION OF THE INVENTION

The field of application of the invention is within the sector of the industry engaged in the manufacture of bicycle accessories, most specifically focussing in the field of the telescopic seat posts to regulate the height of the saddle.

### BACKGROUND OF THE INVENTION

As it is known, when riding down a slope, namely with mountain bikes, it is safer and more comfortable that the saddle is located in a position lower than that normally used to ride on a flat surface or upwards. For this, and in order to avoid to get off the bicycle every time it is wished to change the height of the saddle, the telescopic seat post is currently known.

These seat posts allow to lower the height of the saddle by pressing the driving control located under the saddle or remotely, on the handlebar. The saddle, usually, goes down taking profit of the weight of the cyclist and goes up by means of an elastic element of the compressed air or spring type. In some of them the locked positions they are discrete and in others, continuous.

To newly raise the saddle height and to position it at the suitable pedalling position, it is sufficient to stand up and activate the control, the seat post comes back to its initial position.

For this, it usually has two types of mechanisms, the operating mechanism and the locking mechanism.

The operating mechanism is in charge of acting on the locking mechanism to carry out the change of position of the saddle. Some are directly operated from the seat post itself and many others from the handlebar. To transmit this motion a cable or hydraulic system is usually used but matching an electric or wireless system with an electric actuator also is contemplated.

Basically, there exists two types of locking mechanisms, based on their operating principle: hydraulic or mechanical.

The mechanical seat posts have discrete positions and the reversing speed can be controlled with the air pressure, its main advantages being the price and reliability.

On its hand, the hydraulic seat posts allow to gradually change and with best accuracy the height of the saddle. It can be placed at the position wished within the journey and the return to the initial position is gradual and soft although the price is higher because of the great complexity of the system.

Anyway, the building shape or structure more used in this type of seat posts is based on two "telescopic" tubes , that means, two concentric tubes that, inserted one within the other are extending or retracting to determine a longer or shorter length between their ends and, therefore, increasing or diminishing the height to which the saddle is positioned, coupled on the top end thereof with respect to the frame of the bicycle where the other end of the seat post is fixed, for which purpose in the seat post having mechanical locking one of the two tubes has slots or holes in which the interlocking gear is locked.

This makes that this tube with slots or holes has to have a thickness sufficient in order that, with the concentration of stresses due to the bending and compression, the tube does not break. Due to the minimum wall necessary at the area of the slot, the said wall remains very thick and therefore the weight of the seat post is increased.

The essential objective of this invention therefore is to develop an improved type of telescopic seat post with a double inner tube that prevents the need to include the described inner tube with slots having walls so thick and therefore it can show a greater lightness without diminishing the resistance of the assembly.

With this, several advantages are achieved. On the one hand, the reduction of the weight of the seat post that, in turn, entails a reduction of the weight of the bicycle, that is always significant. But, in addition, and no less important, the cost of manufacturing the seat post is cut down because no so much material or material so thick are required and it can vary because two different materials can be matched seeking different characteristics.

On the other hand, and as reference to the current state of the art, it shall be pointed out that, although in the market different types and models of telescopic seat posts are known, at least this applicant is not aware of the existence of any showing technical and structural characteristics equal or similar to those concretely presented by the one claimed herein.

Document US 2016/304146A1 discloses an adjustable length post for a bicycle.

Document US 2015/232142A1 discloses a bicycle seatpost assembly comprising a first cylinder, a second cylinder, and a positioning structure

Document CN 204688263U discloses a seat pipe assembly with adjustable bicycle.

Document EP 3042833A2 discloses a bicycle assembly comprising a saddle adjustment assembly.

### EXPLANATION OF THE INVENTION

The telescopic seat post of the invention is defined in claim 1. Dependent claims define preferred embodiments.

The telescopic seat post for bicycles proposed by the invention is therefore configurated as a novelty within the field of application, because when implementing it, the above-mentioned objectives are satisfactorily reached, the characterizing details making it possible being conveniently gathered in the final claims attached to this description.

Concretely, what the invention proposes, as it was stated before, is a telescopic seat post having a mechanical locking, the purpose of which is to allow regulating the height of the saddle of the bicycle without getting off therefrom, it is distinguished in that it shows an improved structural configuration that, among other features, contemplates, for replacing the significantly thick conventional slotted tube by a double inner tube that, among other advantages, provides greater lightness and resistance. This double inner tube is coupled to the mechanical locking mechanism of the seat post.

The remote control can be installed as well with the connection to the fluid hose by the lower part of the seat post, in its coupling to the frame of the bicycle, as inverted, that means, with the connection by the top part, under the saddle.

On the other hand, in the event that a hydraulic control is used to unlock the mechanism of the seat post, in a top view, the operating trigger that operates the piston of the said control remains located behind the trigger hinge. The piston can be directly pushed with the trigger or by means of any other element. For example, a bearing or a connecting rod.

Last, it shall be pointed out that, according to another characteristic of the seat post of the invention, the head of its top end, where the saddle is coupled by means of a concave curved part, named clamp set, instead of the cylindric surface as usual, it has two conical faces on which the said part or clamp set is supported, which guarantees that the said clamp set remains centred with respect to the seat post and cannot move laterally

The telescopic seat post for bicycles disclosed therefore consists of an innovating structure having characteristics unknown up to now for the purpose to which it is designed, reasons that jointly with its practical utility, provide it with the sufficient foundation to obtain the privilege of exclusivity applied for.

### DESCRIPTION OF THE DRAWINGS

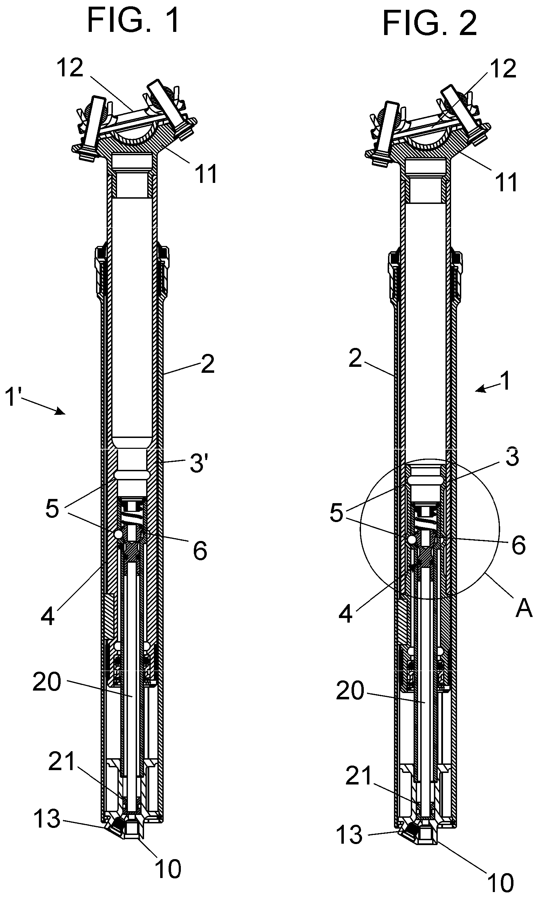

To complement the disclosure being done and in order to assist to best understand the characteristics of the invention, as an integral part thereof, a set of drawings is attached to this specification in which for illustration and no limitation purpose the following has been represented:
The figure number 1.- It shows a longitudinal sectional view of an example of conventional seat post representing the current state of the art, its mains parts and elements can be seen that it comprises, having been represented fixed in an intermediate position.
the figure number 2.- It shows a longitudinal sectional view similar to that shown in the figure 1, of an example of the seat post for bicycles, object of the invention, the main parts and elements of which can be seen that it comprises, namely what makes it different from the already known,
the figure number 3.- It shows an enlarged sectional view of the detail A appearing in the figure 2, where the distinctive elements of the seat post according to the invention can be more clearly seen, namely the locking mechanism;
the figure number 4.- It shows a half sectional elevational view of another example of the telescopic seat post for bicycles, according to the invention, in this case a variant of inverted embodiment;
the figures numbers 5, 6 and 7.- They show respective sectional in perspective and elevational and plan views of the remote control of the seat post that is incorporated in the handlebar; and
the figures numbers 8 and 9.- They show respective sectional front elevational and sectional lateral of the top end of the seat post of the invention the configuration thereof for adapting it to the saddle can be seen; and

### PREFERRED EMBODIMENT OF THE INVENTION

Seen the mentioned figures and according to the numerals adopted, no limitative examples of the telescopic seat post of the invention can be seen, that comprises the parts and elements mentioned and disclosed in detail below.

Thus, as it can be seen in the figures 1 and 2, the telescopic seat post (1) of the invention is of those that comprises a larger external tube (2) within which a smaller inner tube (3, 3') axially slides that, in turn, houses a locking mechanism (4) formed by elements that can be inserted in slots (5), holes or internal cavities, said elements comprising a cam (6) that is axially moving pushed by a stem (20) that is operated by the slave piston (21) of the hydraulic operating mechanism that, for example, is housed in a control drive (8) that cooperate with the handlebar has a master piston (7) for such operating. At the top end of the seat post, this latter has a head (11) with a coupling part or clamp set (12) to incorporate the saddle, its height being regulated depending on the length defined by the said tubes (2,3) between both ends with the said locking mechanism (4).

With respect to the figure 1, it can be seen how, according to the prior art, in the conventional seat post (1'), the slots (5) of the interlocking gear (4) are cut directly on the internal surface of the wall of a smaller inner tube (3'), the said mechanism (4) being directly housed within the said smaller inner tube (3'), and the said wall having a significant thickness in order that, despite the slots (5) cut in it, it sustains without breaking the stresses due to the bending and compression it sustains with the use.

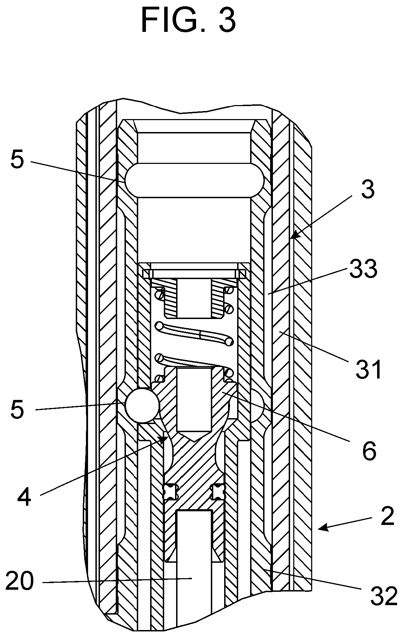

Unlike this, as it can be seen in the figure 2 and with more details in the figure 3, in the seat post (1) of the invention, the smaller inner tube (3') is replaced by a smaller double inner tube (3) that is composed by two concentric tubes (31, 32) that are axially cooperating to each other, where a first tube (31) determines the external wall of this smaller double inner tube (3) and a second tube (32) determines the internal wall in which are incorporated the slots (5) of the interlocking gear (4) cut on its internal wall, the said gear (4) being inserted within this second tube (32) that only works axially and the diameter of which can be variable ,defining an intermediate chamber (33), having also a variable perimeter, between the first (31) and second (32) tubes to eliminate weight in the whole seat post (1).

In an exemplary embodiment not part of the present invention shown in figures 2 and 3, the smaller double inner tube (3) is movable and at its top end the head (11) with the coupling clamp set (12) for the saddle is integrated, while the larger external tube (2) is the one having the holding (10), close to the said holding (10) to the frame a plug (13) of the drain of the hydraulic for driving the cam (6) is located.

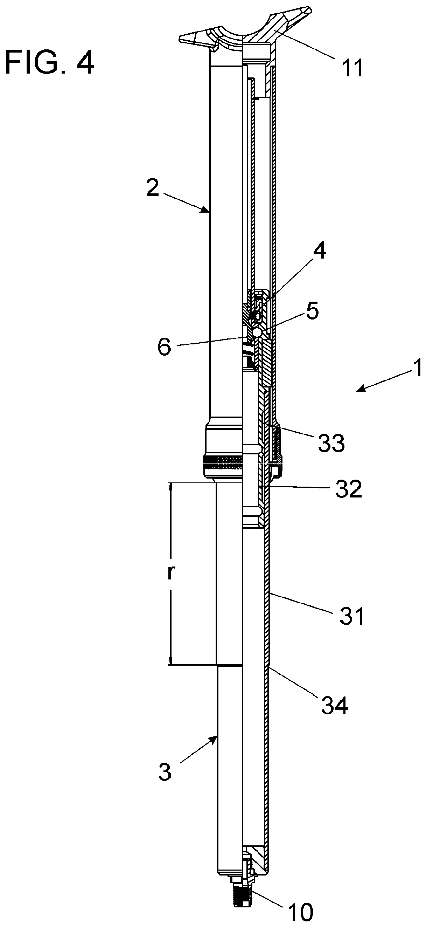

However, according to the invention, the arrangement of the tubes (2,3) is reverse, so that, as it can be seen in the figure 4, the larger external tube (2) constitutes the movable part of the seat post (1) and incorporates at the top the head (11) for coupling the saddle, while the smaller double inner tube (3) is the one incorporating the holding (10) to the frame of the bicycle.

Concretely, the first tube (31) of the smaller double inner tube (3) is the one that incorporates, at its end, the holding (10) to the frame or structure of the bicycle. This first tube (31), in addition, comprises step (34) to prevent that the movable part of the seat post (1), in this case the larger external tube (2), collides against the structure of the bicycle, and being it a necessary condition that the said larger tube (2) have a length longer than the run (r) of the adjusting system.

On the other hand, as it can be seen in the said figure 4, in this option of embodiment, the cam (6) is driven from the top part of the seat post (1).

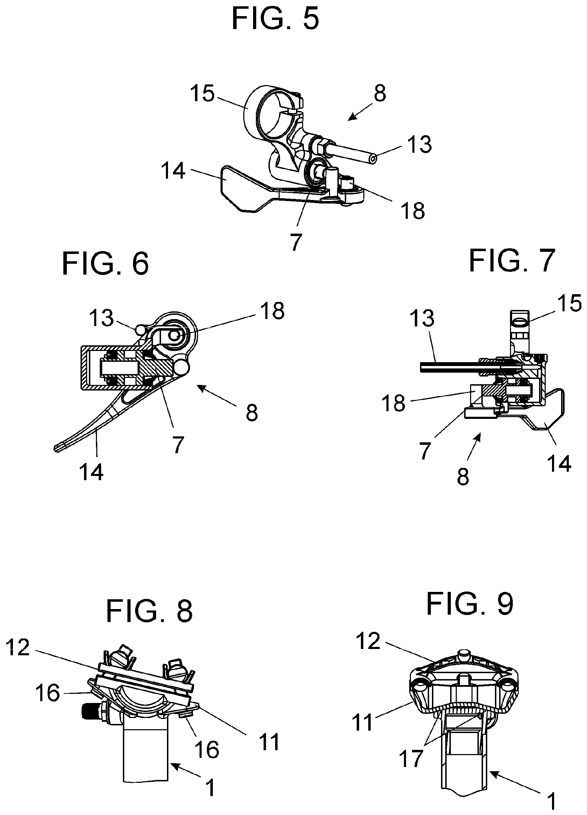

In the event that a remote control (8) having an hydraulic system is used to unlock the locking mechanism (4) of the seat post (1), as it can be seen in the figures 5, 6 and 7, comprising a master piston (7) that, operated by a trigger (14) activates the fluid exit hose (9), this having a compact arrangement in which, in top view, the piston (7) remains located in a position behind the hinge (18) of the trigger (14), with which compacting the set of elements is achieved that comprises the said control drive (8) in order it does not collide with other elements of the handlebar, to which it is fixed by means of a flange (15).

The master piston (7) of the control drive (8) can be pushed directly with the trigger (14) or by means of some other element, such as a bearing or a connecting rod.

Last, in the figures 8 and 9, the head (11) of the seat post can be seen, where the saddle is coupled by means of a part named clamp set (12), that can swing to and fro on the said head (11) by screwing one or the other of the screws (16) in which the saddle is fixed, to set the position thereof allowing to vary its tilt according to its longitudinal axis, the said head (11) having the peculiarity of comprising two conical faces (17) as surfaces on which supporting the clamp set (12), preventing that it is off centre with respect to the seat post (1) and that it can be moved laterally.

## Claims

1. Telescopic seat post for bicycles that comprises:
a large external tube (2);
a smaller inner tube (3) axially sliding within said external tube (2) and which, in turn, houses a locking mechanism (4) formed by elements that can be inserted in slots (5),
said elements comprising a cam (6) that axially moves pushed by a stem (20) of a slave piston (21) of an hydraulic operating system, and remotely operated by a control drive (8) that, connected through a fluid hose (9), is fixable on the handlebar of the bicycle,
at the lower end of the seat post (1) there exists a holding (10) to the frame of the bicycle and
at the top end of the seat post (1) there exists a head (11) having a coupling part or clamp set (12) to incorporate the saddle, its height being regulated depending on the length defined by the said tubes (2,3) between both ends with the said locking mechanism (4),
wherein the smaller inner tube is a smaller double inner tube (3) composed by two concentric tubes (31, 32), axially cooperating to each other, where a first tube (31) determines an external wall of this smaller double inner tube (3) and a second tube (32) determines an internal wall in which the slots (5) of an interlocking gear of the locking mechanism (4) are cut. the said interlocking gear of locking mechanism (4) being inserted within this second tube (32) the diameter of which is variable,
wherein the first tube (31) and the second tube (32) define between them an intermediate chamber (33) having a variable perimeter **characterised in that** the large external tube (2) constitutes the movable part of the seat post (1) and incorporates at the top the head (11) for coupling the saddle, while the smaller double inner tube (3) is the one incorporating the holding (10) to the frame of the bicycle at the end of the first tube (31),
and wherein the first tube (31) comprises a step (34) to prevent the large external tube (2) from colliding against a structure of the bicycle.

2. Telescopic seat post for bicycles, according to claim 1, wherein the remote control (8) of the hydraulic system to unlock the locking mechanism (4) of the seat post (1), comprises a master piston (7) that, operated by a trigger (14) activates the fluid exit hose (9), having in addition a compact arrangement in which, from a point of a top view, the piston (7) remains located in a position behind a hinge (18) of the trigger (14).

3. Telescopic seat post for bicycles according to claim 1, wherein the head (11) comprises two conical faces (8) as surfaces on which supporting the clamp set (12), preventing that it is off centre with respect to the seat post (1) and that it can be moved laterally.

## Patentansprüche

1. Teleskopische Sattelstütze für Fahrräder, umfassend:
ein großes Außenrohr (2);
ein kleineres Innenrohr (3), das innerhalb des Außenrohrs (2) axial verschiebbar ist und seinerseits einen Verriegelungsmechanismus (4) aufnimmt, der durch Elemente gebildet ist, die in Schlitze (5) einsetzbar sind,
wobei die Elemente einen Nocken (6) umfassen, der sich, durch eine Stange (20) eines Nehmerkolbens (21) eines hydraulischen Betätigungssystems gedrückt, axial bewegt und durch eine Steuereinrichtung (8), die über einen Fluidschlauch (9) verbunden und an dem Lenker des Fahrrads befestigbar ist, ferngesteuert betätigt wird,
wobei an dem unteren Ende der Sattelstütze (1) eine Halterung (10) zur Befestigung an dem Fahrradrahmen vorgesehen ist und
wobei an dem oberen Ende der Sattelstütze (1) ein Kopfstück (11) vorgesehen ist, das ein Kupplungsteil oder eine Klemmanordnung (12) zur Aufnahme des Sattels aufweist, dessen Höhe in Abhängigkeit von der durch die Rohre (2, 3) zwischen beiden Enden definierten Länge mittels des Verriegelungsmechanismus (4) eingestellt wird,
wobei das kleinere Innenrohr ein kleineres doppeltes Innenrohr (3) ist, das aus zwei konzentrischen Rohren (31, 32) besteht, die axial miteinander zusammenwirken, wo ein erstes Rohr (31) eine Außenwand dieses kleineren doppelten Innenrohrs (3) bildet und ein zweites Rohr (32) eine Innenwand bildet, in welche die Schlitze (5) einer Verriegelungsverzahnung des Verriegelungsmechanismus (4) eingeschnitten sind, wobei die Verriegelungsverzahnung des Verriegelungsmechanismus (4) innerhalb dieses zweiten Rohrs (32) angeordnet ist, dessen Durchmesser veränderlich ist,
wobei das erste Rohr (31) und das zweite Rohr (32) zwischen sich eine Zwischenkammer (33) definieren, die einen veränderlichen Umfang aufweist, **dadurch gekennzeichnet, dass** das große Außenrohr (2) den beweglichen Teil der Sattelstütze (1) bildet und an dem oberen Ende das Kopfstück (11) zum Ankoppeln des Sattels beinhaltet, während das kleinere doppelte Innenrohr (3) die Halterung (10) zur Befestigung an dem Fahrradrahmen an dem Ende des ersten Rohrs (31) beinhaltet,
und wobei das erste Rohr (31) einen Absatz (34) umfasst, um zu verhindern, dass das große Außenrohr (2) gegen eine Struktur des Fahrrads stößt.

2. Teleskopische Sattelstütze für Fahrräder nach Anspruch 1, wobei die Fernsteuerung (8) des hydraulischen Systems zum Entriegeln des Verriegelungsmechanismus (4) der Sattelstütze (1) einen Geberkolben (7) umfasst, der durch einen Betätigungshebel (14) betätigt wird und den Fluidauslassschlauch (9) aktiviert, und zudem eine kompakte Anordnung aufweist, bei der sich der Kolben (7) in einer Draufsicht in einer Position hinter einem Gelenk (18) des Betätigungshebels (14) befindet.

3. Teleskopische Sattelstütze für Fahrräder nach Anspruch 1, wobei das Kopfstück (11) zwei konische Flächen (8) als Auflageflächen zum Abstützen der Klemmanordnung (12) umfasst, wodurch verhindert wird, dass diese gegenüber der Sattelstütze (1) versetzt ist und seitlich verschoben werden kann.

## Revendications

1. Montant de siège télescopique pour bicyclettes qui comprend:
un grand tube extérieur (2);
un tube intérieur plus petit (3) coulissant axialement au sein dudit tube extérieur (2) et qui, à son tour, loge un mécanisme de verrouillage (4) formé d'éléments qui peuvent être insérés dans des fentes (5),
lesdits éléments comprenant une came (6) qui se meut axialement poussée par une tige (20) d'un piston esclave (21) d'un système d'actionnement hydraulique, et actionné à distance par un organe de commande (8) qui, raccordé par une conduite de fluide (9), peut être fixé sur le guidon de la bicyclette,
au niveau de l'extrémité inférieure du montant de siège (1), se trouve un élément de retenue (10) au cadre de la bicyclette et
au niveau de l'extrémité supérieure du montant de siège (1) se trouve une tête (11) ayant une pièce d'accouplement ou un ensemble de serrage (12) pour intégrer la selle, sa hauteur étant réglée en fonction de la longueur définie par lesdits tubes (2, 3) entre les deux extrémités avec ledit mécanisme de verrouillage (4),
dans lequel le tube intérieur plus petit est un double tube intérieur plus petit (3) composé de deux tubes concentriques (31, 32), coopérant axialement l'un avec l'autre, où un premier tube (31) détermine une paroi extérieure de ce double tube intérieur plus petit (3) et un second tube (32) détermine une paroi intérieure dans laquelle sont ménagées les fentes (5) d'un engrenage d'emboîtement du mécanisme de verrouillage (4), ledit engrenage d'emboîtement du mécanisme de verrouillage (4) étant inséré au sein de ce second tube (32) dont le diamètre est variable,
dans lequel le premier tube (31) et le second tube (32) définissent entre eux une chambre intermédiaire (33) ayant un périmètre variable, **caractérisé en ce que** le grand tube extérieur (2) constitue la partie mobile du montant de siège (1) et intègre au-dessus la tête (11) permettant d'accoupler la selle, tandis que le double tube intérieur plus petit (3) est celui qui intègre l'élément de retenue (10) au cadre de la bicyclette au niveau de l'extrémité du premier tube (31),
et dans lequel le premier tube (31) comprend un épaulement (34) pour empêcher le grand tube extérieur (2) d'entrer en collision avec une structure de la bicyclette.

2. Montant de siège télescopique pour bicyclettes, selon la revendication 1, dans lequel la commande à distance (8) du système hydraulique pour déverrouiller le mécanisme de verrouillage (4) du montant de siège (1), comprend un piston maître (7) qui, actionné par une gâchette (14), active la conduite de sortie de fluide (9), ayant en outre un agencement compacte dans laquelle, vu de dessus, le piston (7) reste situé dans une position derrière une charnière (18) de la gâchette (14).

3. Montant de siège télescopique pour bicyclettes selon la revendication 1, dans laquelle la tête (11) comprend deux faces coniques (8) en guise de surfaces sur lesquelles supporter l'ensemble de serrage (12), empêchant qu'il ne soit désaxé par rapport au montant de siège (1) et qu'il ne puisse se mouvoir latéralement.
